# EUROPEAN PATENT APPLICATION

(11) **EP 4 451 421 A1**
(43) Date of publication of application: **23.10.2024**
(21) Application number: 22908033.8
(22) Date of filing: 16.12.2022
(51) Int. Cl.: H01M 10/44, H02J 7/00, H01M 10/54

(54) **DISCHARGE METHOD OF BATTERY**

(30) Priority: 17.12.2021 KR 20210182179
(71) Applicant: POSCO Holdings Inc., Pohang-si, Gyeongsangbuk-do 37859 (KR); RESEARCH INSTITUTE OF INDUSTRIAL SCIENCE & TECHNOLOGY, Pohang-si, Gyeongsangbuk-do 37673 (KR)
(72) Inventor: PARK, Tae-Joon, Pohang-si, Gyeongsangbuk-do 37669 (KR); LEE, Seung-Hee, Pohang-si, Gyeongsangbuk-do 37655 (KR); LEE, Lae-Kyoung, Dalseong-gun, Daegu 43016 (KR); WOO, Ok-Ju, Pohang-si, Gyeongsangbuk-do 37671 (KR); WI, Hyeon-Gon, Pohang-si, Gyeongsangbuk-do 37660 (KR); CHOI, Kwon-Young, Seoul 07987 (KR)
(74) Representative: Meissner Bolte Partnerschaft mbB
(86) International application number: PCT/KR2022/020658
(87) International publication number: WO 2023/113568

(57) **Abstract**

The present invention relates to a discharge method of a battery, comprising: a first discharging step of discharging a battery by connecting the battery and a power converter and applying voltage thereto; and a second discharging step of discharging the battery by applying a reverse voltage of the voltage of the first discharging step, after the first discharging step. According to the present invention, electrical energy of a battery can be recovered and recycled, and an electrically safe state can be secured in a subsequent disassembly process by putting the battery in a completely discharged state in which normal operation is impossible.

## Description

### Technical Field

The present invention relates to a discharge method of a battery.

### Background Art

A process of recovering expensive metals used in batteries such as small lithium-ion batteries used in mobile and home appliances mainly uses methods such as crushing and grinding after discharging, sintering, wet smelting after a separation process, and in some processes, a discharge process is omitted and a dry melting and separation process is used commercially. The most common discharging method in the wet process is a natural discharging method by immersing a secondary battery in an aqueous chemical solution manufactured for the purpose of completely discharging the secondary battery.

Meanwhile, a secondary battery for a vehicle is manufactured to use a relatively higher voltage (currently around 800V) than the voltage of a single battery, 4V, by connecting several secondary batteries in series and in parallel to ensure efficiency in driving the vehicle, and is structurally and robustly assembled for safety.

When a secondary battery assembly for a vehicle is subjected to natural discharge treatment by immersing the secondary battery assembly in an aqueous chemical solution, the difficulty of the process of dismantling unnecessary components increases to increase a recovery rate of a desired metal, and thus, this case mainly uses a method in which after discharging energy contained in the secondary battery to a level of 0 using an electrical load, the secondary battery assembly is disassembled manually, and is immersed in an aqueous chemical solution to discharge the secondary battery naturally.

In this case, after a certain amount of time has passed after discharging the secondary battery to normal energy on a level of "0," output voltage of a normal battery is recovered from 0V to 2.5V, and an 800V automotive battery maintains voltage of about 500V, which may threaten safety and still cause a difficult manual task.

### Summary of Invention

### Technical Problem

The present invention is developed in consideration of the circumstances described above, and an aspect of the present invention is to provide a discharge method of a battery in which electrical energy of a battery may be recovered and recycled, and an electrically safe state may be secured in a subsequent disassembly process by putting the battery in a completely discharged state in which normal operation is impossible.

### Solution to Problem

According to an aspect of the present invention, provided is a discharge method of a battery including: a first discharging step of discharging a battery by connecting the battery and a power converter and applying voltage thereto; and a second discharging step of discharging the battery by applying a reverse voltage of the voltage of the first discharging step, after the first discharging step.

The first discharging step may be performed until a state of charge (SOC) of the battery becomes 0.

The discharge method may include a step of discharging the battery until a terminal voltage of the battery becomes 0V after a state of charge (SOC) of the battery becomes 0.

In the step of discharging the battery until the terminal voltage of the battery reaches 0V, a short circuit may be generated.

In the first discharging step, applied voltage may be 2.5 to 4 V, and a current may be 0.3 C or more.

In the first discharging step, a battery temperature may be 60°C or lower.

In the first discharging step, a power converter may operate in an energy regeneration mode.

Voltage applied in the second discharging step may be 0 to 3V, and a current may be 0.05 to 1C.

The second discharging step may be performed a plurality of times.

The second discharging step may be terminated when short circuit resistance is 30 to 60 mQ.

In the second discharging step, a power converter may independently distribute energy to a plurality of discharged batteries.

### Advantageous Effects of Invention

According to an aspect of the present invention, electrical energy of a battery may be recovered and recycled, and an electrically safe state may be secured in a subsequent disassembly process by putting the battery in a completely discharged state in which normal operation is impossible.

### Brief Description of Drawings

FIG. 1 is a graph showing a change in voltage when a lithium ion battery is discharged, left unattended, and then discharged again.
FIG. 2 illustrates a battery discharge device according to an embodiment of the present invention.
FIG. 3 illustrates an example of discharging a battery by configuring a DC-DC converter as a Buck-Boost power converter according to an embodiment of the present invention. Best Mode for Invention

Hereinafter, preferred embodiments of the present invention will be described with reference to various embodiments. However, embodiments of the present invention may be modified into various different forms, and the scope of the present invention is not limited to the embodiments described below.

The present invention relates to a discharge method of a battery.

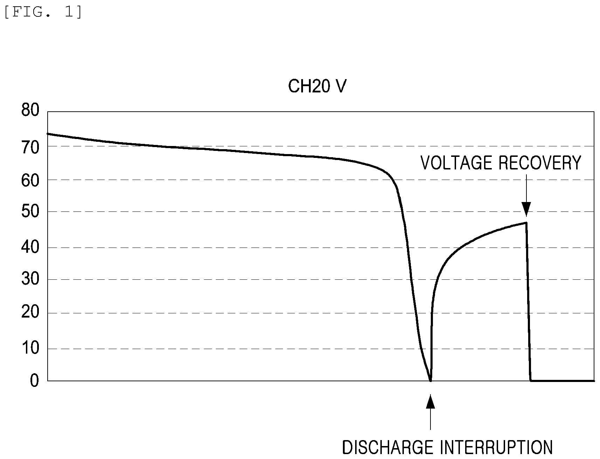

FIG. 1 is a graph showing a change in voltage when a lithium ion battery is discharged, left unattended, and then discharged again. Referring to FIG. 1, generally, after the lithium ion battery is discharged by 0V with a value of a state of charge (SOC) of a battery such as a lithium-ion battery being 0 or less (2.5V to 3V), when the lithium ion battery is left for several minutes to several tens of minutes, a phenomenon in which terminal voltage is recovered may be confirmed, and in this time, when the discharging is performed again, it may be confirmed that a significant amount of initial discharge current is generated. From this, it may be seen that a significant amount of lithium (Li) that is not discharged exists in a negative electrode through normal discharge. After painstaking research to solve the problem caused by the presence of lithium remaining in the negative electrode, the present inventors have found that in a case in which a voltage opposite to the discharge from a point at which battery voltage appears at 0V during discharging until now, that is, reverse voltage, is applied, lithium remaining on the negative electrode may be moved to a positive electrode more quickly, and when this condition continues for a certain period of time, this develops into an internal short circuit and the terminal voltage of the battery becomes unrecoverable, and have completed the present invention.

According to an aspect of the present invention, provided is a discharge method of a battery including: a first discharging step of discharging a battery by connecting the battery and a power converter and applying voltage thereto; and a second discharging step of discharging the battery by applying a reverse voltage of the voltage of the first discharging step, after the first discharging step.

The first discharging step may be performed until the state of charge (SOC) of the battery becomes 0. In a discharge section of the first discharging step, for a discharge rate, a fast discharge rate may be secured by setting a maximum value within the rated current and an allowable temperature range according to the battery standard. Accordingly, in the first discharging step, the applied voltage may be 2.5 to 4V, the current may be 0.3C or more, and the temperature of the battery may be 60°C or lower.

As described above, after the state of charge (SOC) of the battery becomes 0, a step of discharging the battery until the terminal voltage becomes 0V may be included. Specifically, in a case in which a value when the terminal voltage of the battery is divided by an internal impedance of a power converter, that is, a magnitude of a short circuit current is voltage decreased to a lower limit of an operating current of a power semiconductor used in the power converter, it may be desirable to approach 0V by switching from an operation mode for energy recovery to a short circuit operation mode or reverse voltage. This is because an effective operating range of the power converter is designed to be in a 3V region based on a unit cell, so that operating near 0V is not only inefficient but also acts as a factor in slowing down the discharge rate. The present invention is not particularly limited, but the short circuit operation mode may be adjusted to minimize the sum of the short circuit operation time and the reverse voltage operation time depending on the type of battery, and is preferably performed for 1 minute or less.

Furthermore, in the first discharging step, the power converter may operate in an energy regeneration mode, through which it may be possible to recover and recycle energy remaining in the battery.

After the first discharging step, a second discharging step may be performed in which the battery is discharged by applying reverse voltage of the first discharging step.

In this case, the voltage applied in the second discharging step is, preferably, 0 to 3V, and the current is, preferably, 0.05 to 1C, which may be set to operate in response to changes in internal resistance. More specifically, the current may be quickly increased to a level of 1C by applying the reverse voltage, and the terminal voltage of the battery may increase to a level of 2 to 3V in a negative direction, and then, when the current is maintained, the terminal voltage may be in a decreased shape again, and after passing an inflection point representing maximum voltage, the reverse voltage may be reduced to maintain a current amount at a level of 0.

The second discharging step may be performed a plurality of times. Depending on the operation based on reverse voltage application, after the current becomes 0, the battery voltage may gradually approach 0V, but a secondary reverse voltage operation may be repeatedly performed in the same manner as a primary reverse voltage operation, thus stabilizing voltage fluctuations.

The second discharging step may be performed until the short circuit resistance is 30 to 60 mQ. In more detail, a size of maximum negative voltage appearing as the second discharging step advances may tend to gradually decrease, which is due to the short circuit resistance decreasing as the internal short circuit progresses. Accordingly, the determination to terminate the reverse voltage operation may be performed when the short circuit resistance obtained by dividing the maximum negative voltage during the repeated operation of the second discharging step by the reverse current is 30 to 60 mS2.

The second discharging step operation time may be finely adjusted through experimentation to minimize the sum of a short circuit operation duration and reverse voltage operation time depending on the type of secondary battery, and the operation may usually be repeated within 1 minute.

Additionally, in the second discharging step, the power converter may independently distribute energy to a plurality of batteries being discharged.

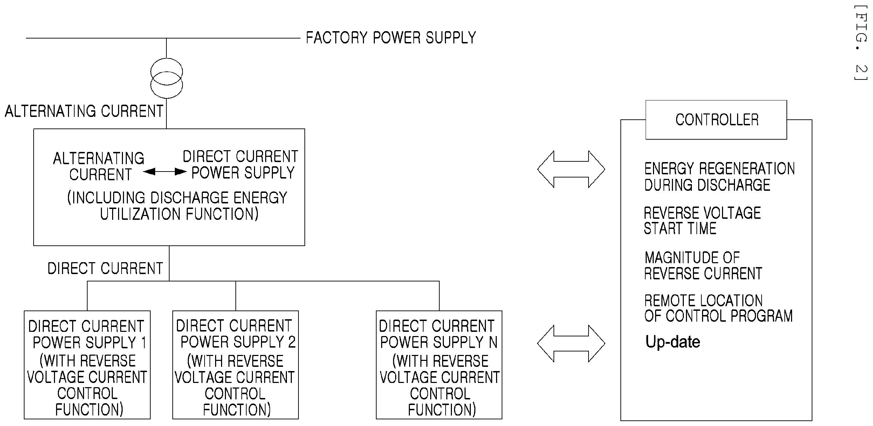

Meanwhile, FIG. 2 illustrates a battery discharge device according to an embodiment of the present invention, and according to another aspect of the present invention, provided is a battery discharge device including: a power converter including an AC-DC power supply device and a DC-DC power supply device; and a controller.

The AC-DC power supply device may control direct current power used jointly, such as factory power, and may reverse-feed electrical energy obtained when a lower DC-DC power supply device performs a battery discharge function to a commonly used power source. The total amount of the reverse-fed electrical energy may be defined as a maximum value by adding and calculating the total amount of discharge energy from each battery in the lower DC-DC power supply device, and a capacity of the AC-DC power supply device may be designed to operate with the total amount.

Accordingly, the AC-DC power supply device may perform the function of maintaining commonly used DC voltage to supply sufficient energy when the DC-DC power supply device applies a reverse voltage to the secondary battery.

The DC-DC power supply is not particularly limited and may be composed of a combination of a unipolar Buck-Boost converter and a mechanical switch capable of reversing output polarity, or may be composed of a bipolar singlephase PWM converter.

Meanwhile, the controller may serve to control a discharge process of the secondary battery, including the first discharging step of discharging the secondary battery by connecting the battery and the power converter and applying voltage thereto, and the second discharging step of discharging the secondary battery by applying voltage (reverse voltage) opposite to the voltage of the first discharging step. The controller may build a database of a discharge control pattern of the power converter according to the electric vehicle model and battery type, thus allowing a driver to select and drive on-site or remotely, and the database may be configured to be remotely updateable.

### Mode for Invention

Hereinafter, the present invention will be described in more detail through examples. The following examples are intended to illustrate the present invention in more detail and are not intended to limit the present invention thereto.

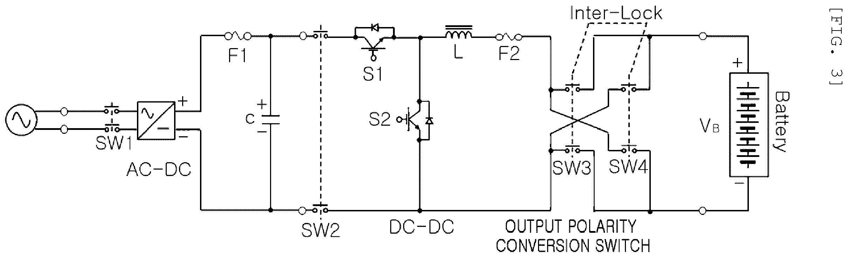

Referring to FIG. 3, in the first discharging step, in a case of S/W 1 closed, S/W 2 closed, S/W 3 closed, and S/W 4 open, S1 is prevented from operating, and a switching operation of S2 allows the energy of the secondary battery to be transmitted to a DC power capacitor of an AC-DC converter, and the AC-DC converter transmits energy transferred from the battery to a DC-DC converter.

Then, when the battery voltage drops to 0 V after 2.5 V due to sufficient discharge, a short circuit discharge is performed by continuing an on-state of S2 at the time when it is determined that the short circuit discharge is possible in consideration of the internal impedance of the converter. In this case, S1 does not operate.

Then, by closing S/W 4 and opening S/W 3, a mode is switched to a reverse voltage operation mode, and S2 is turned off and the reverse voltage operation mode is executed using S1, thereby completely discharging the battery.

Although the embodiment of the present invention has been described in detail above, the scope of the present invention is not limited thereto. Therefore, those of ordinary skill in the art may make various modifications and changes without departing from the technical concept of the present invention described in the claims.

## Claims

1. A discharge method of a battery, comprising:
a first discharging step of discharging a battery by connecting the battery and a power converter and applying voltage thereto; and
a second discharging step of discharging the battery by applying a reverse voltage of the voltage of the first discharging step, after the first discharging step.

2. The discharge method of a battery of claim 1, wherein the first discharging step is performed until a state of charge (SOC) of the battery becomes 0.

3. The discharge method of a battery of claim 1, comprising:
a step of discharging the battery until a terminal voltage of the battery becomes 0V after a state of charge (SOC) of the battery becomes 0.

4. The discharge method of a battery of claim 3, wherein in the step of discharging the battery until the terminal voltage of the battery reaches 0V, a short circuit is generated.

5. The discharge method of a battery of claim 1, wherein in the first discharging step, applied voltage is 2.5 to 4 V, and a current is 0.3 C or more.

6. The discharge method of a battery of claim 1, wherein in the first discharging step, a battery temperature is 60°C or lower.

7. The discharge method of a battery of claim 1, wherein in the first discharging step, a power converter operates in an energy regeneration mode.

8. The discharge method of a battery of claim 1, wherein in the second discharging step, applied voltage is 0 to 3V, and a current is 0.05 to 1C.

9. The discharge method of a battery of claim 1, wherein the second discharging step is performed a plurality of times.

10. The discharge method of a battery of claim 1, wherein the second discharging step is terminated when short circuit resistance is 30 to 60 mQ.

11. The discharge method of a battery of claim 1, wherein in the second discharging step, a power converter independently distributes energy to a plurality of discharged batteries.
